# EUROPEAN PATENT APPLICATION

(11) **EP 4 819 267 A1**
(43) Date of publication of application: **07.10.2026**
(21) Application number: 25226260.5
(22) Date of filing: 22.12.2025
(51) Int. Cl.: H01M 10/04, C09J 7/00, C09J 9/00

(54) **BATTERY TAPE AND BATTERY ATTACHED WITH THE SAME**

(30) Priority: 03.04.2025 KR 20250043186
(71) Applicant: SAMSUNG SDI CO., LTD., Yongin-si, Gyeonggi-do 17084 (KR)
(72) Inventor: HAN, Seungyeon, 17084 Yongin-si (KR)
(74) Representative: Marks & Clerk LLP

(57) **Abstract**

A battery tape includes: a base attachment portion to be attached to at least part of a first surface of a battery cell; a first side attachment portion extending from one side of the base attachment portion, and to be attached to one side of a second surface of the battery cell opposite to the first surface; a second side attachment portion extending from another side of the base attachment portion, and to be attached to another side of the second surface; and a reinforcement attachment portion extending from the first side attachment portion, and to be attached to the one side of the second surface to reinforce an adhesive strength of the first side attachment portion.

## Description

### BACKGROUND

### Field

Aspects of embodiments of the present disclosure relate to a battery tape, and a battery including the battery tape attached.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles, and for storing power (e.g., home and/or utility scale power storage). A secondary battery generally includes an electrode assembly composed of a positive electrode and a negative electrode, a case accommodating the electrode assembly, and electrode terminals connected to the electrode assembly.

For batteries used in portable small electronic devices, a user may separate and replace the battery from the electronic device as needed or desired. A pull-tab tape may be attached to the battery so that the user can separate the battery from the electronic device by pulling the pull-tab tape. As such, it may be desirable for the pull-tab tape to provide an adhesive strength so that the battery remains attached to the pull-tab tape and does not drop while the battery is being removed.

The above information disclosed in this Background section is for enhancement of understanding of the background of the present disclosure, and therefore, it may contain information that does not constitute related (or prior) art.

### SUMMARY

Embodiments of the present disclosure may be directed to a battery tape, and a battery including the battery tape attached according to the above.

These and additional aspects and features of the present disclosure will be described in, or will be apparent from, the following description of some embodiments of the present disclosure.

According to one or more embodiments of the present disclosure, a battery tape includes: a base attachment portion configured to be attached to at least part of a first surface of a battery cell; a first side attachment portion extending from one side of the base attachment portion, and configured to be attached to one side of a second surface of the battery cell opposite to the first surface; a second side attachment portion extending from another side of the base attachment portion, and configured to be attached to another side of the second surface; and a reinforcement attachment portion extending from the first side attachment portion, and configured to be attached to the one side of the second surface to reinforce an adhesive strength of the first side attachment portion.

In some embodiments, a sum of adhesive strengths of the reinforcement attachment portion and the first side attachment portion to be attached to the one side of the second surface may be 0.8 to 1.2 times an adhesive strength of the second side attachment portion to be attached to the other side of the second surface.

In some embodiments, a sum of adhesive areas of the reinforcement attachment portion and the first side attachment portion to be attached to the one side of the second surface may be 0.8 to 1.2 times an adhesive area of the second side attachment portion to be attached to the other side of the second surface.

In some embodiments, a size of the reinforcement attachment portion may correspond to a sum of adhesive strengths of the reinforcement attachment portion and the first side attachment portion to be attached to the one side of the second surface of the battery cell that may equal an adhesive strength of the second side attachment portion to be attached to the other side of the second surface of the battery cell.

In some embodiments, the reinforcement attachment portion may include: a reinforcement attachment-portion body extending from the first side attachment portion; and a reinforcement adhesive layer on one surface of the reinforcement attachment-portion body, and configured to be attached to the second surface of the battery cell.

In some embodiments, the reinforcement adhesive layer may include a plurality of rectangular adhesive layers located with a spacing therebetween along a direction perpendicular to a direction in which the first side attachment portion extends from the base attachment portion.

In some embodiments, the reinforcement adhesive layer may include a plurality of polygonal adhesive layers located with a spacing therebetween, e.g. along a direction perpendicular to a direction in which the first side attachment portion extends from the base attachment portion.

In some embodiments, the reinforcement adhesive layer may include a plurality of circular or elliptical adhesive layers located with a spacing therebetween, e.g. along a direction perpendicular to a direction in which the first side attachment portion extends from the base attachment portion.

In some embodiments, the reinforcement attachment-portion body may include a plurality of rectangular bodies located with a spacing therebetween along a direction perpendicular to a direction in which the first side attachment portion extends from the base attachment portion.

In some embodiments, the reinforcement attachment-portion body may include a plurality of polygonal bodies located along a direction perpendicular to a direction in which the first side attachment portion extends from the base attachment portion.

In some embodiments, the reinforcement attachment-portion body may include a plurality of semicircular or semi-elliptical bodies located along a direction perpendicular to a direction in which the first side attachment portion extends from the base attachment portion.

In some embodiments, the first side attachment portion may include: a first side attachment-portion body extending from the base attachment portion; and a first adhesive layer on one surface of the first side attachment-portion body, and configured to be attached to the second surface of the battery cell.

In some embodiments, the first adhesive layer may include a plurality of rectangular adhesive layers located with a spacing therebetween along a direction perpendicular to a direction in which the first side attachment-portion body extends from the base attachment portion.

In some embodiments, the first adhesive layer may include a plurality of polygonal adhesive layers located with a spacing therebetween, e.g. along a direction perpendicular to a direction in which the first side attachment-portion body extends from the base attachment portion.

In some embodiments, the first adhesive layer may include a plurality of circular or elliptical adhesive layers located with a spacing therebetween, e.g. along a direction perpendicular to a direction in which the first side attachment-portion body extends from the base attachment portion.

In some embodiments, the reinforcement attachment portion may include a notch groove located to avoid a marking portion on the second surface of the battery cell.

According to one or more embodiments of the present disclosure, a battery includes: a battery cell; and a battery tape attached to a surface of the battery cell. The battery tape includes: a base attachment portion attached to at least part of a first surface of the battery cell; a first side attachment portion extending from one side of the base attachment portion, and attached to one side of a second surface of the battery cell opposite to the first surface; a second side attachment portion extending from another side of the base attachment portion, and attached to another side of the second surface; and a reinforcement attachment portion extending from the first side attachment portion, and attached to the one side of the second surface to reinforce an adhesive strength of the first side attachment portion.

In some embodiments, a sum of adhesive strengths of the reinforcement attachment portion and the first side attachment portion attached to the one side of the second surface may be 0.8 to 1.2 times an adhesive strength of the second side attachment portion attached to the other side of the second surface.

In some embodiments, a sum of adhesive areas of the reinforcement attachment portion and the first side attachment portion attached to the one side of the second surface may be 0.8 to 1.2 times an adhesive area of the second side attachment portion attached to the other side of the second surface.

In some embodiments, a size of the reinforcement attachment portion may correspond to a sum of adhesive strengths of the reinforcement attachment portion and the first side attachment portion attached to the one side of the second surface of the battery cell that may equal an adhesive strength of the second side attachment portion attached to the other side of the second surface of the battery cell.

According to some embodiments of the present disclosure, by providing attachment portions attached to both sides (e.g., opposite sides) of a battery cell with the same or similar adhesive strength as each other, separation of the battery cell from the battery tape may be prevented or substantially prevented.

According to some embodiments of the present disclosure, by providing the attachment portions attached to both sides (e.g., opposite sides) of the battery cell with the same or similar adhesive area as each other, separation of the battery cell from the battery tape may be prevented or substantially prevented.

At least some of the above and other features of the invention are set out in the claims.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.

### BRIEF DESCRIPTION OF DRAWINGS

The above and other aspects and features of the present disclosure will be more clearly understood from the following detailed description of the illustrative, nonlimiting embodiments with reference to the accompanying drawings.
FIG. 1 is a plan view illustrating an example of a battery tape according to some embodiments of the present disclosure.
FIG. 2 is a plan view illustrating an example of a first side attachment portion and a reinforcement attachment portion of a battery tape according to some embodiments of the present disclosure.
FIG. 3 is a plan view illustrating an example of a reinforcement pressure-sensitive adhesive portion formed in a reinforcement attachment portion of a battery tape according to some embodiments of the present disclosure.
FIG. 4 is a plan view illustrating an example of a first pressure-sensitive adhesive portion formed in a first side attachment portion of a battery tape according to some embodiments of the present disclosure.
FIG. 5 is a plan view illustrating an example of a reinforcement pressure-sensitive adhesive portion formed in a reinforcement attachment portion of a battery tape according to some embodiments of the present disclosure.
FIG. 6 is a plan view illustrating an example of a first pressure-sensitive adhesive portion formed in a first side attachment portion of a battery tape according to some embodiments of the present disclosure.
FIG. 7 is a plan view illustrating an example of a reinforcement pressure-sensitive adhesive portion formed in a reinforcement attachment portion of a battery tape according to some embodiments of the present disclosure.
FIG. 8 is a plan view illustrating an example of a first pressure-sensitive adhesive portion formed in a first side attachment portion of a battery tape according to some embodiments of the present disclosure.
FIG. 9 is a plan view illustrating an example of a reinforcement attachment-portion body in a reinforcement attachment portion of a battery tape according to some embodiments of the present disclosure.
FIG. 10 is a plan view illustrating an example of a reinforcement attachment-portion body in a reinforcement attachment portion of a battery tape according to some embodiments of the present disclosure.
FIG. 11 is a plan view illustrating an example of a reinforcement attachment-portion body in a reinforcement attachment portion of a battery tape according to some embodiments of the present disclosure.
FIG. 12 is a plan view illustrating an example of a reinforcement attachment portion in which a notch groove is formed in the reinforcement attachment portion of a battery tape according to some embodiments of the present disclosure.
FIG. 13 is an exploded perspective view illustrating an example of a battery according to some embodiments of the present disclosure.
FIG. 14 is a plan view illustrating an example of a battery according to some embodiments of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Further, as would be understood by a person having ordinary skill in the art, in view of the present disclosure in its entirety, each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner, unless otherwise stated or implied.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Further, it should be expected that the shapes shown in the figures may vary in practice depending, for example, on tolerances and/or manufacturing techniques. Accordingly, the embodiments of the present disclosure should not be construed as being limited to the specific shapes shown in the figures, and should be construed considering changes in shapes that may occur, for example, as a result of manufacturing. As such, the shapes shown in the drawings may not depict the actual shapes of areas of the device, and the present disclosure is not limited thereto.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited herein is intended to include all higher numerical limitations subsumed therein.

References to two compared elements, features, and the like as being "the same" as each other may also include "substantially the same" as each other. Thus, the phrase "substantially the same" may include a case having a variation that is considered low in the art, for example, such as a variation of 5% or less. In addition, when a certain parameter is referred to as being uniform in a given region, it may mean that it is uniform in terms of an average.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

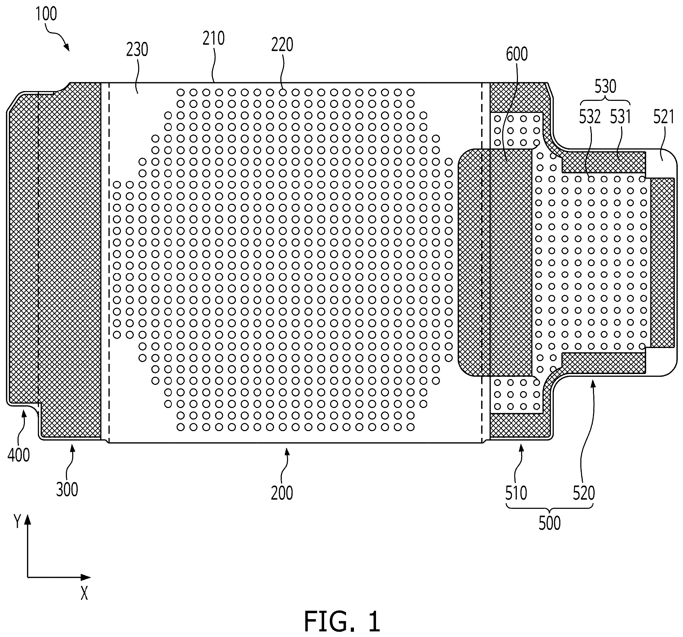

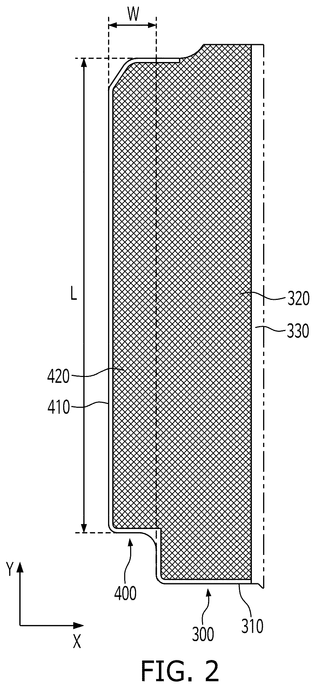

FIG. 1 is a plan view illustrating an example of a battery tape according to some embodiments of the present disclosure. FIG. 2 is a plan view illustrating an example of a first side attachment portion and a reinforcement attachment portion in a battery tape according to some embodiments of the present disclosure.

Referring to FIGS. 1 and 2, a battery tape 100 according to some embodiments of the present disclosure may include a base attachment portion 200, a first side attachment portion 300, a second side attachment portion 500, and a reinforcement attachment portion 400. The base attachment portion 200 may be attached to at least part of a first surface of a battery cell. The first side attachment portion 300 may extend from one side of the base attachment portion 200, and may be attached to one side of a second surface of the battery cell opposite to the first surface of the battery cell. The second side attachment portion 500 may extend from another side (e.g., an opposite side) of the base attachment portion 200, and may be attached to another side (e.g., an opposite side) of the second surface of the battery cell. The reinforcement attachment portion 400 may extend from the first side attachment portion 300, and may be attached to the one side of the second surface of the battery cell to reinforce an adhesive strength of the first side attachment portion 300.

The base attachment portion 200 may include a base attachment-portion body 210, a base adhesive layer 220, and a base non-adhesive region 230. The base attachment-portion body 210 may be formed in a suitable shape corresponding to the first surface of the battery cell. The base adhesive layer 220 may be formed on at least a part of one surface of the base attachment-portion body 210, and may be attached to the first surface of the battery cell. The base non-adhesive region 230 may be provided in the base attachment-portion body 210 at an area in which the base adhesive layer 220 is not formed.

In some embodiments, when the first surface of the battery cell is rectangular, the base attachment-portion body 210 may also be formed in a rectangular shape and size corresponding to those of the first surface of the battery cell. The base attachment-portion body 210 may be formed in a shape and size covering an entire or substantially entire first surface of the battery cell.

When the base attachment-portion body 210 is formed in a rectangular shape, the base adhesive layer 220 may be formed over an entire or substantially entire region of the base attachment-portion body 210, except for the four corner regions of the base attachment-portion body 210, so that the base non-adhesive regions 230 may be provided at the four corner regions.

In comparison, when the base adhesive layer 220 is formed over an entire front surface (e.g., the one surface) of the base attachment-portion body 210 without the base non-adhesive regions 230, and the battery tape 100 is attached to the battery cell, a torsional load applied to the battery cell may weaken or detach the base adhesive layer 220 at the four corners of the base attachment-portion body 210. In that case, a noise may be generated in a portion where the adhesive strength is weakened or detached.

Accordingly, in some embodiments, the base non-adhesive region 230 may be provided at the four corner regions, where a weakening or a detachment may occur, to prevent or substantially prevent the noise.

In some embodiments, as shown in FIG. 1, each base non-adhesive region 230 may be formed as a triangle at a corresponding corner. However, the shape of the non-adhesive region 230 is not limited thereto. Each base non-adhesive region 230 may instead be formed in an L-shape, or in any other suitable shape, as long as the base adhesive layer 220 is not formed in the region that may experience the weakening or the detachment.

The second side attachment portion 500 may include a second side attachment-portion body 510 that extends from the other side of the base attachment portion 200, and a grip portion 520 that extends from the second side attachment-portion body 510.

The second side attachment-portion body 510 may be formed in a height direction (Y) that is perpendicular to or substantially perpendicular to a width direction (X) in which the base attachment portion 200 extends, and may have a size in the height direction (Y) that is the same or substantially the same as (or similar to) that of the base attachment portion 200. After the base attachment portion 200 is attached to the first surface of the battery cell, the second side attachment-portion body 510 may surround (e.g., around a periphery of) an opposite side edge of the battery cell, and may be attached to the other side of the second surface of the battery cell.

The grip portion 520 extends in the width direction (X) from the second side attachment-portion body 510 of the battery tape 100, and a size of the grip portion 520 in the height direction (Y) may be smaller than that of the second side attachment-portion body 510. The height direction (Y) of the grip portion 520 may be perpendicular to or substantially perpendicular to the width direction (X) of the battery tape 100.

A second adhesive layer 530 may be formed on the second side attachment-portion body 510 and the grip portion 520. In some embodiments, the second adhesive layer 530 may include a stronger adhesive layer 531 and a weaker adhesive layer 532. For example, the stronger adhesive layer 531 may have an adhesive strength greater than that of the weaker adhesive layer 532. The stronger adhesive layer 531 may be formed along an outermost periphery of the second side attachment-portion body 510 and the grip portion 520, and the weaker adhesive layer 532 may be formed inside the stronger adhesive layer 531. However, the positions at which the stronger adhesive layer 531 and the weaker adhesive layer 532 are formed are not limited thereto.

Non-adhesive regions 521 in which the second adhesive layer 530 is not formed may be provided at corner portions (e.g., both corner portions) of an end area of the grip portion 520. The non-adhesive regions 521 may facilitate a user removal of the grip portion 520 from the battery cell. In some embodiments, each non-adhesive region 521 may be rectangular. However, the shape of the non-adhesive region 521 is not limited thereto, and each non-adhesive region 521 may instead be triangular, L-shaped, or any other suitable shape. For example, the grip portion 520 separated from the battery cell may be grasped and pulled by a user to remove the battery from an electronic device.

The battery tape 100 may further include a stronger adhesion portion 600 formed by connecting the base attachment portion 200 and the second side attachment portion 500 to each other. The stronger adhesion portion 600 may be partially formed in the base attachment-portion body 210, and may be partially formed in the second side attachment-portion body 510 in the width direction (X) in which the second side attachment portion 500 extends from the base attachment portion 200. The stronger adhesion portion 600 may have a smaller size in the height direction (Y) than those of the base attachment-portion body 210 and the second side attachment-portion body 510, and may be formed in a central region of the base attachment-portion body 210 and the second side attachment-portion body 510 in the height direction (Y). The stronger adhesion portion 600 may be spaced apart from the stronger adhesive layer 531 formed along the outermost periphery of the second side attachment-portion body 510.

In some embodiments, the stronger adhesion portion 600 may be formed of an adhesive layer having an adhesive strength stronger than those of the weaker adhesive layer 532 of the second adhesive layer 530 and the base adhesive layer 220. The stronger adhesion portion 600 may be formed to have an adhesive strength that is the same or substantially the same as (or similar to) those of the stronger adhesive layer 531 of the second adhesive layer 530, a first adhesive layer 320, and a reinforcement adhesive layer 420, which will be described in more detail below.

The first side attachment portion 300 may include a first side attachment-portion body 310 that extends from one side of the base attachment portion 200. The first adhesive layer 320 may be formed on an entire or substantially entire surface or a partial surface of the first side attachment-portion body 310, and may be attached to the one side of the second surface of the battery cell. In some embodiments, the first adhesive layer 320 may be formed on part of the first side attachment-portion body 310. A region of the first side attachment-portion body 310 on which the first adhesive layer 320 is not formed may be a first non-adhesive region 330. The first non-adhesive region 330 may be provided between the first adhesive layer 320 and the base attachment portion 200.

The first side attachment-portion body 310 may be formed in the height direction (Y) perpendicular to the width direction (X) in which the base attachment portion 200 extends, and may have a size in the height direction (Y) that is the same or substantially the same as (or similar to) that of the base attachment portion 200. After the base attachment portion 200 is attached to the first surface of the battery cell, the first side attachment-portion body 310 may surround (e.g., around a periphery of) one side edge of the battery cell, and may be attached to the one side of the second surface of the battery cell. The first non-adhesive region 330 may correspond to a portion surrounding (e.g., around a periphery of) the one side edge of the battery cell. In some embodiments, the first adhesive layer 320 may instead be formed over the entire or substantially entire surface of the first side attachment-portion body 310 without the first non-adhesive region 330.

Referring to FIGS. 1 and 2, the reinforcement attachment portion 400 may include a reinforcement attachment-portion body 410 that extends from the first side attachment portion 300. The reinforcement adhesive layer 420 may be formed on one surface of the reinforcement attachment-portion body 410, and may be attached to the one side of the second surface of the battery cell. The reinforcement attachment portion 400 may be attached together with the first side attachment portion 300 to the one side of the second surface of the battery cell. The reinforcement attachment portion 400 may extend from the first side attachment portion 300, and may reinforce the adhesive strength of the first side attachment portion 300. In other words, a size of the first side attachment portion 300 may be determined (e.g., may be predetermined or preset) and may not change, whereas a size or adhesive strength of the reinforcement attachment portion 400 may be variously designed as needed or desired to provide a desired reinforcement adhesive strength.

A size of the reinforcement attachment portion 400 may be determined based on a sum of adhesive strengths of the reinforcement attachment portion 400 and the first side attachment portion 300 attached to the one side of the second surface to equal or substantially equal an adhesive strength of the second side attachment portion 500 attached to the other side of the second surface.

Referring to FIG. 2, in some embodiments, at least one of a size W in the width direction (X) in which the reinforcement attachment portion 400 extends from the first side attachment portion 300 or a size L in the height direction (Y) perpendicular to or substantially perpendicular to the width direction (X) may be determined or set according to a magnitude of a reinforcement adhesive strength desired to reinforce the adhesive strength of the first side attachment portion 300. When a greater reinforcement is desired, at least one of the size W or the size L of the reinforcement attachment portion 400 may be increased (e.g., may be formed larger). The size L may be equal to or smaller than a size of the first side attachment portion 300 in the height direction (Y).

In some embodiments, a sum of adhesive strengths of the reinforcement attachment portion 400 and the first side attachment portion 300 attached to the one side of the second surface of the battery cell may be 0.8-1.2 times an adhesive strength of the second side attachment portion 500 attached to the other side of the second surface. For balance between the adhesive strengths of the attachment portions provided on both sides (e.g., opposite sides) of the second surface, the adhesive strengths of the reinforcement attachment portion 400 and the first side attachment portion 300 may be equal to or substantially equal to the adhesive strength of the second side attachment portion 500.

The adhesive strength may vary depending on an adhesive layer formed on each attachment portion. In some embodiments, when unit-area adhesive strengths of the first adhesive layer 320, the reinforcement adhesive layer 420, and the second adhesive layer 530 differ, the adhesive layers may be formed so that the adhesive strengths of the first adhesive layer 320, the reinforcement adhesive layer 420, and the second adhesive layer 530 are the same or substantially the same as (or similar to) each other.

In some embodiments, a sum of adhesive areas of the reinforcement attachment portion 400 and the first side attachment portion 300 attached to the one side of the second surface may be 0.8-1.2 times an adhesive area of the second side attachment portion 500 attached to the other side of the second surface. For balance between the adhesive strengths of the attachment portions provided on both sides (e.g., opposite sides) of the second surface, adhesive areas of the reinforcement attachment portion 400 and the first side attachment portion 300 may be equal to or substantially equal to an adhesive area of the second side attachment portion 500.

The adhesive strength may vary depending on an adhesive layer formed on each attachment portion. In some embodiments, when unit-area adhesive strengths of the first adhesive layer 320, the reinforcement adhesive layer 420, and the second adhesive layer 530 are the same or substantially the same as each other, the adhesive strength may be determined or set according to an area over which each adhesive layer is formed.

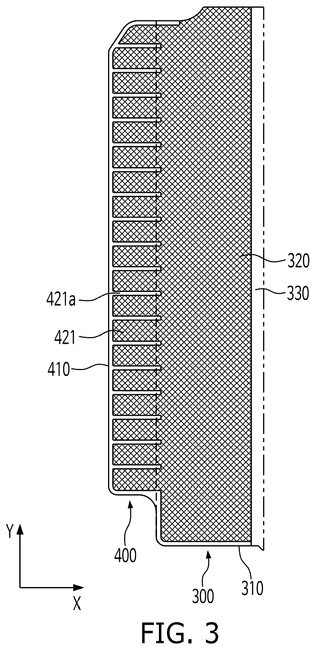

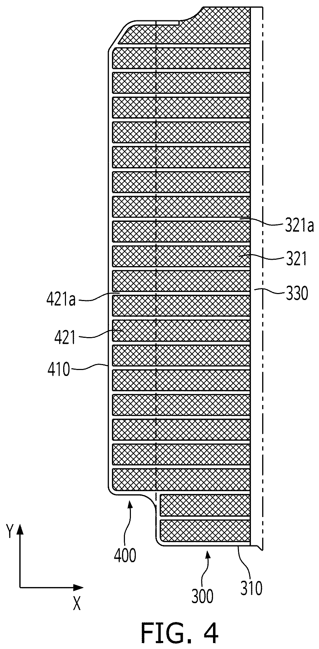

FIG. 3 is a plan view illustrating an example of a reinforcement pressure-sensitive adhesive portion formed in the reinforcement attachment portion of a battery tape according to some embodiments of the present disclosure. FIG. 4 is a plan view illustrating an example of a first pressure-sensitive adhesive portion formed in a first side attachment portion of a battery tape according to some embodiments of the present disclosure.

Referring to FIG. 3, the reinforcement adhesive layer formed on one surface of the reinforcement attachment-portion body 410 may include a plurality of rectangular adhesive layers 421 arranged with a suitable spacing (e.g., a predetermined spacing) therebetween along the height direction (Y) perpendicular to or substantially perpendicular to the width direction (X) in which the first side attachment portion 300 extends from the base attachment portion 200.

The plurality of rectangular adhesive layers 421 are arranged with the spacing (e.g., the predetermined spacing) therebetween, and a non-adhesive region 421a may be provided between adjacent rectangular adhesive layers 421. The non-adhesive region 421a, in which no adhesive layer is formed, may be formed in a direction parallel to or substantially parallel to the width direction (X). When the reinforcement attachment portion 400 is attached to the second surface of the battery cell, the non-adhesive region 421a may prevent or substantially prevent air bubbles from occurring between the reinforcement attachment portion 400 and the second surface. If air bubbles occur, pressing the bubble-generated region may move the bubbles to the non-adhesive region 421a, and the bubbles may be discharged through the non-adhesive region 421a to the outside.

Referring to FIG. 4, similarly, a non-adhesive region 321a may be formed in the first side attachment portion 300. In other words, the first adhesive layer 320 may include a plurality of rectangular adhesive layers 321 arranged with a suitable spacing (e.g., a predetermined spacing) therebetween along the height direction (Y) perpendicular to or substantially perpendicular to the width direction (X) in which the first side attachment-portion body 310 extends from the base attachment portion 200. The plurality of rectangular adhesive layers 321 are arranged with the spacing, and the non-adhesive region 321a may be provided between adjacent rectangular adhesive layers 321. The non-adhesive region 321a of the first side attachment portion 300 may be formed to connect with the non-adhesive region 421a of the reinforcement attachment portion 400. Therefore, when the first side attachment portion 300 is attached to the second surface of the battery cell, if air bubbles are generated between the first side attachment portion 300 and the second surface, the air bubbles may be discharged through the connected non-adhesive regions by pressing the area where the air bubbles are generated.

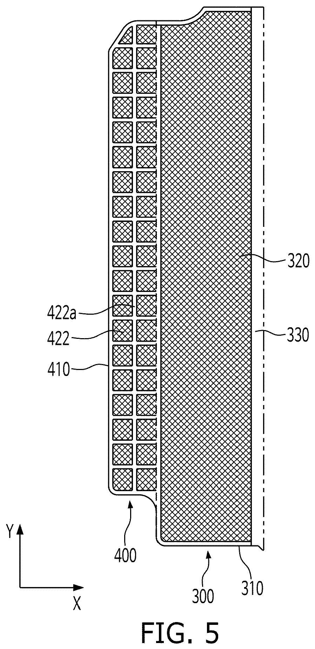

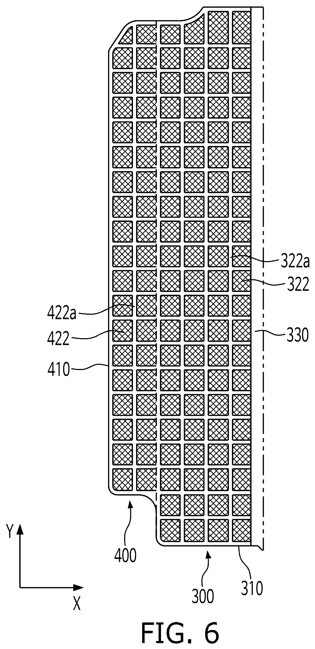

FIG. 5 is a plan view illustrating an example of a reinforcement pressure-sensitive adhesive portion formed in a reinforcement attachment portion of a battery tape according to some embodiments of the present disclosure. FIG. 6 is a plan view illustrating an example of a first pressure-sensitive adhesive portion formed in a first side attachment portion of a battery tape according to some embodiments of the present disclosure.

Referring to FIG. 5, the reinforcement adhesive layer formed on one surface of the reinforcement attachment-portion body 410 may include a plurality of polygonal adhesive layers 422 arranged with a suitable spacing (e.g., a predetermined spacing) therebetween. The plurality of polygonal adhesive layers 422 may be arranged along multiple rows and columns. In some embodiments, each polygonal adhesive layer 422 may be rectangular. However, the present disclosure is not limited thereto, and each polygonal adhesive layer 422 may be triangular, pentagonal, hexagonal, or other suitable polygonal shapes, and different polygons may be mixed.

Although FIG. 5 shows two columns of polygonal adhesive layers 422, the number of columns may be three or more, in which case, sizes of the polygonal adhesive layers 422 may be reduced.

The plurality of polygonal adhesive layers 422 are arranged with the spacing, and a non-adhesive region 422a may be provided between adjacent polygonal adhesive layers 422. The non-adhesive region 422a may prevent or substantially prevent bubbles from occurring when the reinforcement attachment portion 400 is attached to the second surface of the battery cell.

Referring to FIG. 6, similarly, the first adhesive layer of the first side attachment portion 300 may include a plurality of polygonal adhesive layers 322 arranged with a suitable spacing (e.g., a predetermined spacing) therebetween. Further, a non-adhesive region 322a may be provided between adjacent polygonal adhesive layers 322. The non-adhesive region 322a of the first side attachment portion 300 may be formed to connect with the non-adhesive region 422a of the reinforcement attachment portion 400. Therefore, when the first side attachment portion 300 is attached to the second surface of the battery cell, air bubbles that may be generated between the first side attachment portion 300 and the second surface of the battery cell may be reduced.

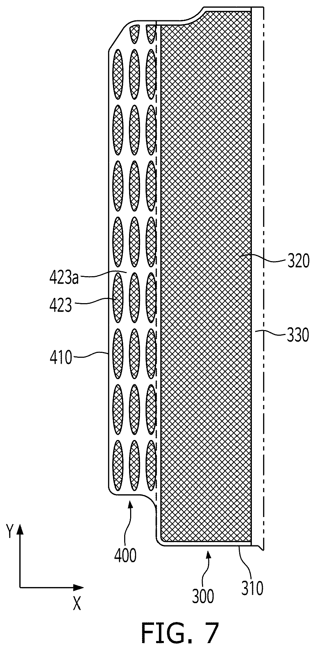

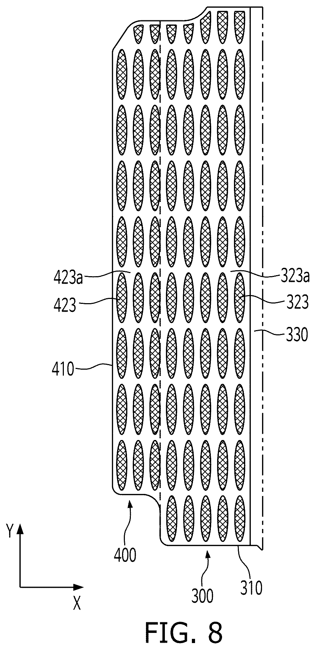

FIG. 7 is a plan view illustrating an example of a reinforcement pressure-sensitive adhesive portion formed in a reinforcement attachment portion of a battery tape according to some embodiments of the present disclosure. FIG. 8 is a plan view illustrating an example of a first pressure-sensitive adhesive portion formed in a first side attachment portion of the battery tape according to some embodiments of the present disclosure.

Referring to FIG. 7, the reinforcement adhesive layer formed on one surface of the reinforcement attachment-portion body 410 may include a plurality of circular or elliptical adhesive layers. In some embodiments, the reinforcement adhesive layer may include a plurality of elliptical adhesive layers 423. The plurality of elliptical adhesive layers 423 may be arranged along multiple rows and columns at the reinforcement attachment-portion body 410. As illustrated in FIG. 7, the plurality of elliptical adhesive layers 423 may be arranged, but the present disclosure is not limited thereto, and elliptical and circular adhesive layers may be mixed. Further, adhesive layers having shapes of polygons, circles, and ellipses may be mixed.

Although FIG. 7 shows three columns of elliptical adhesive layers 423, one, two, or four or more columns may be used, in which case sizes of the adhesive layers 423 may be adjusted accordingly.

The plurality of elliptical adhesive layers 423 are arranged with a suitable spacing (e.g., a predetermined spacing) therebetween, and a non-adhesive region 423a may be provided between adjacent adhesive layers 423, thereby preventing or substantially preventing bubble generation between the reinforcement attachment portion 400 and the second surface of the battery cell when the reinforcement attachment portion 400 is attached to the second surface of the battery cell.

Referring to FIG. 8, similarly, the first adhesive layer of the first side attachment portion 300 may include a plurality of elliptical adhesive layers 323 arranged with a suitable spacing (e.g., a predetermined spacing) therebetween. The elliptical adhesive layers 323 may have the same size and shape as each other, and may be arranged at the same interval as those of the elliptical adhesive layers 423. However, the present disclosure is not limited thereto, and the elliptical adhesive layers 323 may have different sizes and shapes with each other, and/or may be arranged at a different interval from those of the elliptical adhesive layers 423.

A non-adhesive region 323a may be provided between adjacent elliptical adhesive layers 323. The non-adhesive region 323a of the first side attachment portion 300 may connect with the non-adhesive region 423a of the reinforcement attachment portion 400, thereby preventing or substantially preventing bubble generation between the first side attachment portion 300 and the second surface of the battery cell when the first side attachment portion 300 is attached to the second surface of the battery cell.

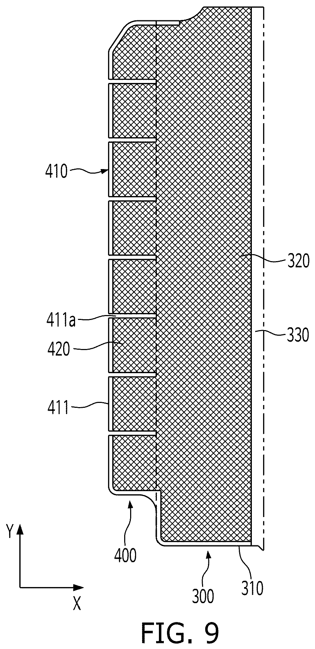

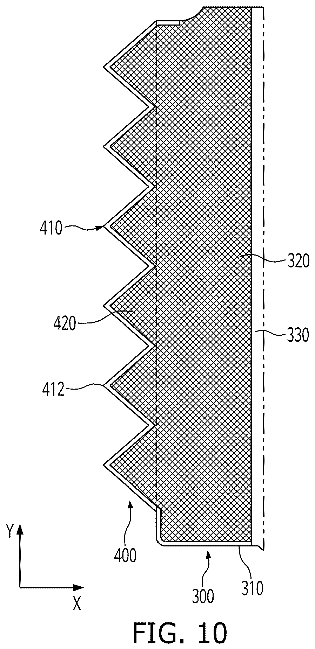

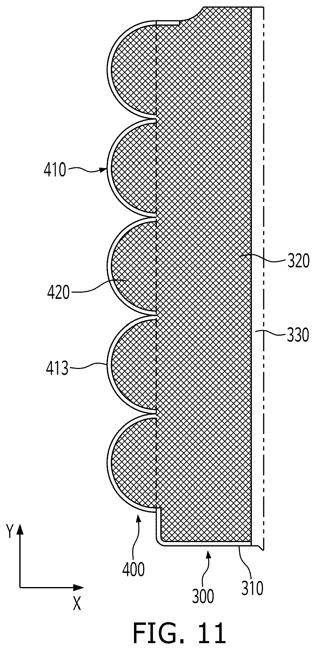

FIG. 9 is a plan view illustrating an example of a reinforcement attachment-portion body in a reinforcement attachment portion of a battery tape according to some embodiments of the present disclosure. FIG. 10 is a plan view illustrating an example of a reinforcement attachment-portion body in a reinforcement attachment portion of a battery tape according to some embodiments of the present disclosure. FIG. 11 is a plan view illustrating an example of a reinforcement attachment-portion body in a reinforcement attachment portion of a battery tape according to some embodiments of the present disclosure.

Referring to FIG. 9, the reinforcement attachment-portion body 410 may include a plurality of rectangular bodies 411 arranged with a suitable spacing (e.g., a predetermined spacing) therebetween along the height direction (Y) perpendicular to or substantially perpendicular to the width direction (X) in which the first side attachment portion 300 extends from the base attachment portion 200. The reinforcement adhesive layer 420 may be formed on each rectangular body 411.

A slit 411a provided between adjacent rectangular bodies 411 may prevent or substantially prevent bubble generation between the reinforcement attachment portion 400 and the second surface of the battery cell when the reinforcement attachment portion 400 is attached to the second surface of the battery cell.

Referring to FIG. 10, the reinforcement attachment-portion body 410 may include a plurality of polygonal bodies 412 arranged along the height direction (Y) perpendicular to or substantially perpendicular to the width direction (X) in which the first side attachment-portion body 310 extends from the base attachment portion 200. In some embodiments, each polygonal body 412 may be triangular. However, the present disclosure is not limited thereto, and other suitable polygons, such as a pentagon and a hexagon, may be used. Each polygonal body 412 may have the reinforcement adhesive layer 420 formed thereon.

Referring to FIG. 11, the reinforcement attachment-portion body 410 may include a plurality of semicircular bodies 413 arranged along the height direction (Y) perpendicular to or substantially perpendicular to the width direction (X) in which the first side attachment-portion body 310 extends from the base attachment portion 200. Each semicircular body 413 may have the reinforcement adhesive layer 420 formed thereon.

The shape of the reinforcement attachment-portion body 410 is not limited to those described above, and semi-elliptical bodies, mixtures of semicircular and semi-elliptical bodies, or mixtures of polygonal, semicircular, and semi-elliptical bodies may be used.

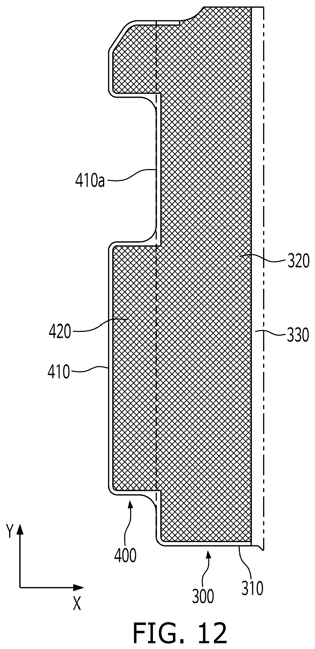

FIG. 12 is a plan view illustrating an example of a reinforcement attachment portion in which a notch groove is formed in the reinforcement attachment portion of a battery tape according to some embodiments of the present disclosure.

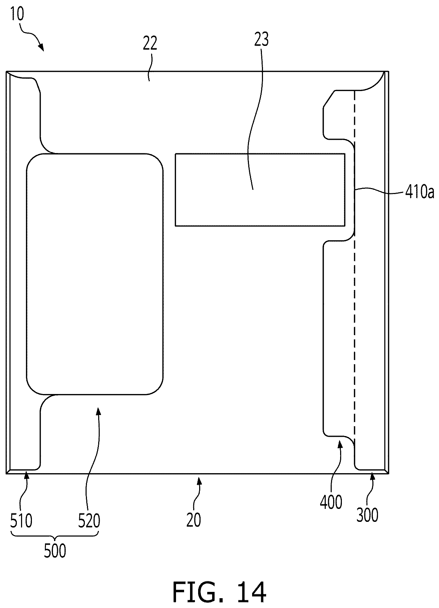

Referring to FIG. 12, the reinforcement attachment portion 400 may include a notch groove 410a formed so as to avoid a marking portion 23 (e.g., see FIG. 14) provided on the second surface of the battery cell. The marking portion may display information regarding the battery. Thus, the notch groove 410a prevents or substantially prevents the reinforcement attachment portion 400 from covering the marking portion. A size and position of the notch groove 410a may be variously modified according to a size and position of the marking portion.

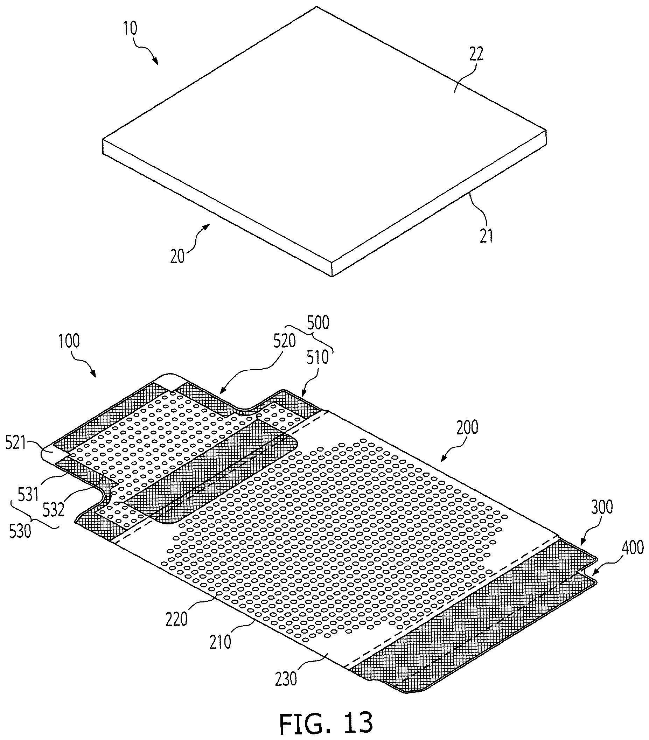

FIG. 13 is an exploded perspective view illustrating an example of a battery according to some embodiments of the present disclosure. FIG. 14 is a plan view illustrating an example of a battery according to some embodiments of the present disclosure.

Referring to FIGS. 13 and 14, a battery 10 according to some embodiments of the present disclosure may include a battery cell 20 that is chargeable and dischargeable and supplies power to an electronic device, and a battery tape 100 attached to a surface of the battery cell 20. The battery tape 100 attached to the battery cell 20 may be coupled with the electronic device together with the battery cell 20. During removal of the battery 10 from the electronic device, a user may pull a portion of the battery tape 100 attached to the battery cell 20 to separate the battery 10.

The battery tape 100 may include a base attachment portion 200 attached to at least part of a first surface 21 of the battery cell 20, a first side attachment portion 300 extending from one side of the base attachment portion 200 and attached to one side of a second surface 22 of the battery cell 20 opposite to the first surface 21, a second side attachment portion 500 extending from another side (e.g., an opposite side) of the base attachment portion 200 and attached to another side (e.g., an opposite side) of the second surface 22, and a reinforcement attachment portion 400 extending from the first side attachment portion 300 and attached to the one side of the second surface 22 to reinforce an adhesive strength of the first side attachment portion 300.

The reinforcement attachment portion 400, which reinforces the adhesive strength of the first side attachment portion 300, may be suitably sized so that a sum of adhesive strengths of the reinforcement attachment portion 400 and the first side attachment portion 300 attached to the one side of the second surface 22 equals or substantially equals an adhesive strength of the second side attachment portion 500 attached to the other side of the second surface 22.

In some embodiments, a sum of adhesive strengths of the reinforcement attachment portion 400 and the first side attachment portion 300 attached to the one side of the second surface 22 may be 0.8-1.2 times an adhesive strength of the second side attachment portion 500 attached to the other side of the second surface 22.

The adhesive strength may vary depending on an adhesive layer formed on each attachment portion. In some embodiments, when unit-area adhesive strengths of the first adhesive layer 320, the reinforcement adhesive layer 420, and the second adhesive layer 530 differ, the adhesive layers may be formed so that their adhesive strengths become the same or substantially the same as (or similar to) each other.

In some embodiments, a sum of adhesive areas of the reinforcement attachment portion 400 and the first side attachment portion 300 attached to the one side of the second surface 22 may be 0.8-1.2 times an adhesive area of the second side attachment portion 500 attached to the other side of the second surface 22.

The adhesive strength may vary depending on an adhesive layer formed on each attachment portion. In some embodiments, when unit-area adhesive strengths of the first adhesive layer 320, the reinforcement adhesive layer 420, and the second adhesive layer 530 are the same or substantially the same as each other, the adhesive strength may be determined or set according to an area over which each adhesive layer is formed.

The battery tape 100 described above may be the same or substantially the same as any one of the battery tapes 100 described above with reference to FIGS. 1 through 12, and thus, redundant description thereof will not be repeated.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

Embodiments are set out in the following clauses:
1. A battery tape, comprising:
   a base attachment portion attached to at least part of a first surface of a battery cell;
   a first side attachment portion extending from one side of the base attachment portion and attached to one side of a second surface of the battery cell opposite to the first surface;
   a second side attachment portion extending from the other side of the base attachment portion and attached to the other side of the second surface; and
   a reinforcement attachment portion extending from the first side attachment portion and attached to the one side of the second surface to reinforce an adhesive strength of the first side attachment portion.
2. The battery tape according to clause 1, wherein a sum of adhesive strengths of the reinforcement attachment portion and the first side attachment portion attached to the one side of the second surface is 0.8 to 1.2 times an adhesive strength of the second side attachment portion attached to the other side of the second surface.
3. The battery tape according to clause 1 or 2, wherein a sum of adhesive areas of the reinforcement attachment portion and the first side attachment portion attached to the one side of the second surface is 0.8 to 1.2 times an adhesive area of the second side attachment portion attached to the other side of the second surface.
4. The battery tape according to clause 1, 2 or 3, wherein a size of the reinforcement attachment portion is set such that a sum of adhesive strengths of the reinforcement attachment portion and the first side attachment portion attached to the one side of the second surface of the battery cell equals an adhesive strength of the second side attachment portion attached to the other side of the second surface of the battery cell.
5. The battery tape according to any preceding clause, wherein the reinforcement attachment portion comprises:
   a reinforcement attachment-portion body extending from the first side attachment portion; and
   a reinforcement adhesive layer formed on one surface of the reinforcement attachment-portion body and attached to the second surface of the battery cell.
6. The battery tape according to clause 5, wherein the reinforcement adhesive layer comprises a plurality of rectangular adhesive layers arranged with a predetermined spacing in a direction perpendicular to a direction in which the first side attachment portion extends from the base attachment portion.
7. The battery tape according to clause 5, wherein the reinforcement adhesive layer comprises a plurality of polygonal adhesive layers arranged with a predetermined spacing.
8. The battery tape according to clause 5, wherein the reinforcement adhesive layer comprises a plurality of circular or elliptical adhesive layers arranged with a predetermined spacing.
9. The battery tape according to clause 5, 6 or 7, wherein the reinforcement attachment-portion body comprises a plurality of rectangular bodies arranged with a predetermined spacing in a direction perpendicular to a direction in which the first side attachment portion extends from the base attachment portion.
10. The battery tape according to clause 5, 6 or 7, wherein the reinforcement attachment-portion body comprises a plurality of polygonal bodies arranged in a direction perpendicular to a direction in which the first side attachment portion extends from the base attachment portion.
11. The battery tape according to clause 5, 6 or 7, wherein the reinforcement attachment-portion body comprises a plurality of semicircular or semi-elliptical bodies arranged in a direction perpendicular to a direction in which the first side attachment portion extends from the base attachment portion.
12. The battery tape according to any preceding clause, wherein the first side attachment portion comprises:
   a first side attachment-portion body extending from the base attachment portion; and
   a first adhesive layer formed on one surface of the first side attachment-portion body and attached to the second surface of the battery cell.
13. The battery tape according to clause 12, wherein the first adhesive layer comprises a plurality of rectangular adhesive layers arranged with a predetermined spacing in a direction perpendicular to a direction in which the first side attachment-portion body extends from the base attachment portion.
14. The battery tape according to clause 12, wherein the first adhesive layer comprises a plurality of polygonal adhesive layers arranged with a predetermined spacing.
15. The battery tape according to clause 12, wherein the first adhesive layer comprises a plurality of circular or elliptical adhesive layers arranged with a predetermined spacing.
16. The battery tape according to any preceding clause, wherein the reinforcement attachment portion comprises a notch groove formed so as to avoid a marking portion provided on the second surface of the battery cell.
17. A battery, comprising:
   a battery cell; and
   a battery tape attached to a surface of the battery cell,
   the battery tape comprising:
      a base attachment portion attached to at least part of a first surface of the battery cell;
      a first side attachment portion extending from one side of the base attachment portion and attached to one side of a second surface of the battery cell opposite to the first surface;
      a second side attachment portion extending from the other side of the base attachment portion and attached to the other side of the second surface; and
      a reinforcement attachment portion extending from the first side attachment portion and attached to the one side of the second surface to reinforce an adhesive strength of the first side attachment portion.
18. The battery according to clause 17, wherein a sum of adhesive strengths of the reinforcement attachment portion and the first side attachment portion attached to the one side of the second surface is 0.8 to 1.2 times an adhesive strength of the second side attachment portion attached to the other side of the second surface.
19. The battery according to clause 17 or 18, wherein a sum of adhesive areas of the reinforcement attachment portion and the first side attachment portion attached to the one side of the second surface is 0.8 to 1.2 times an adhesive area of the second side attachment portion attached to the other side of the second surface.
20. The battery according to clause 17, 18 or 19, wherein a size of the reinforcement attachment portion is set such that a sum of adhesive strengths of the reinforcement attachment portion and the first side attachment portion attached to the one side of the second surface of the battery cell equals an adhesive strength of the second side attachment portion attached to the other side of the second surface of the battery cell.

## Claims

1. A battery tape (100) comprising:
a base attachment portion (200) configured to be attached to at least part of a first surface (21) of a battery cell (20);
a first side attachment portion (300) extending from one side of the base attachment portion (200), and configured to be attached to one side of a second surface (22) of the battery cell (20) opposite to the first surface (21);
a second side attachment portion (500) extending from another side of the base attachment portion (200), and configured to be attached to another side of the second surface (22); and
a reinforcement attachment portion (400) extending from the first side attachment portion (300), and configured to be attached to the one side of the second surface (22) to reinforce an adhesive strength of the first side attachment portion (300).

2. The battery tape (100) as claimed in claim 1, wherein a sum of adhesive strengths of the reinforcement attachment portion (400) and the first side attachment portion (300) to be attached to the one side of the second surface (22) is 0.8 to 1.2 times an adhesive strength of the second side attachment portion (500) to be attached to the other side of the second surface (22).

3. The battery tape (100) as claimed in claim 1 or 2, wherein a sum of adhesive areas of the reinforcement attachment portion (400) and the first side attachment portion (300) to be attached to the one side of the second surface (22) is 0.8 to 1.2 times an adhesive area of the second side attachment portion (500) to be attached to the other side of the second surface (22).

4. The battery tape (100) as claimed in claim 1, 2 or 3, wherein a size of the reinforcement attachment portion (400) corresponds to a sum of adhesive strengths of the reinforcement attachment portion (400) and the first side attachment portion (300) to be attached to the one side of the second surface (22) of the battery cell (20) that equals an adhesive strength of the second side attachment portion (500) to be attached to the other side of the second surface (22) of the battery cell (20).

5. The battery tape (100) as claimed in any preceding claim, wherein the reinforcement attachment portion (400) comprises:
a reinforcement attachment-portion body (410) extending from the first side attachment portion (300); and
a reinforcement adhesive layer (420) on one surface of the reinforcement attachment-portion body (410), and configured to be attached to the second surface (22) of the battery cell (20).

6. The battery tape (100) as claimed in claim 5, wherein the reinforcement adhesive layer (420) comprises a plurality of rectangular adhesive layers (421) located with a spacing therebetween along a direction perpendicular to a direction in which the first side attachment portion (300) extends from the base attachment portion (200).

7. The battery tape (100) as claimed in claim 5, wherein the reinforcement adhesive layer (420) comprises a plurality of polygonal, circular or elliptical adhesive layers (422, 423) located with a spacing therebetween.

8. The battery tape (100) as claimed in claim 5, 6 or 7, wherein the reinforcement attachment-portion body (410) comprises a plurality of rectangular bodies (411) located with a spacing therebetween along a direction perpendicular to a direction in which the first side attachment portion (300) extends from the base attachment portion (200).

9. The battery tape (100) as claimed in claim 5, 6 or 7, wherein the reinforcement attachment-portion body (410) comprises a plurality of polygonal bodies (412) located along a direction perpendicular to a direction in which the first side attachment portion (300) extends from the base attachment portion (200).

10. The battery tape (100) as claimed in claim 5, 6 or 7, wherein the reinforcement attachment-portion body (410) comprises a plurality of semicircular or semi-elliptical bodies (413) located along a direction perpendicular to a direction in which the first side attachment portion (300) extends from the base attachment portion (200).

11. The battery tape (100) as claimed in any preceding claim, wherein the first side attachment portion (300) comprises:
a first side attachment-portion body (310) extending from the base attachment portion (200); and
a first adhesive layer (320) on one surface of the first side attachment-portion body (310), and configured to be attached to the second surface (22) of the battery cell (20).

12. The battery tape (100) as claimed in claim 11, wherein the first adhesive layer (320) comprises a plurality of rectangular adhesive layers (321) located with a spacing therebetween along a direction perpendicular to a direction in which the first side attachment-portion body (310) extends from the base attachment portion (200).

13. The battery tape (100) as claimed in claim 11, wherein the first adhesive layer (320) comprises a plurality of polygonal, circular or elliptical adhesive layers (322, 323) located with a spacing therebetween.

14. The battery tape (100) as claimed in any preceding claim, wherein the reinforcement attachment portion (400) comprises a notch groove (410a) located to avoid a marking portion (23) on the second surface (22) of the battery cell (20).

15. A battery (10) comprising:
a battery cell (20); and
a battery tape (100) attached to a surface of the battery cell (20),
wherein the battery tape (100) is a battery tape (100) according to any one of claims 1 to 14.
